# EUROPEAN PATENT SPECIFICATION

(11) **EP 2 519 327 B1**
(45) Date of publication and mention of the grant of the patent: **06.04.2016**
(21) Application number: 10844181.7
(22) Date of filing: 10.12.2010
(51) Int. Cl.: A62B 7/10, A62B 18/02, A62B 9/00, B32B 27/12, B32B 3/26, B29L 31/00, B29L 28/00, B29L 31/14, B29C 43/00, B29K 105/08, B29L 31/48, A41D 13/11

(54) **MOLDED AUXETIC MESH AND MANUFACTURING METHOD**
GEFORMTES AUXETISCHES NETZ UND HERSTELLUNGSVERFAHREN
TREILLIS AUXÉTIQUE MOULÉ ET PROCÉDÉ DE FABRICATION

(30) Priority: 30.12.2009 US 291057 P
(43) Date of publication of application: 07.11.2012
(73) Proprietor: 3M Innovative Properties Company, Saint Paul, MN 55133-3427 (US)
(72) Inventor: MARTIN, Philip, G., Saint Paul, Minnesota 55133-3427 (US)
(74) Representative: Isarpatent
(86) International application number: PCT/US2010/059797
(87) International publication number: WO 2011/090587

(56) References cited:
- WO-A1-2004/088015
- WO-A1-2007/135447
- US-A- 4 004 584
- US-A1- 2005 142 331
- US-A1- 2005 142 331
- US-A1- 2006 129 227
- US-A1- 2008 011 021
- US-A1- 2008 035 788
- US-A1- 2008 290 141

## Description

The present invention pertains to a molded auxetic mesh and to a method of making such a mesh.

### BACKGROUND

Auxetic materials have been made by a variety of methods, including etching, printing, die cutting, and laser cutting. Examples of various patent publications that describe auxetic articles and their methods of production include U.S. 6,878,320B1 to Alderson et al., U.S. 2005/0142331A1 to Anderson et al., U.S. 2005/0159066A1 to Alderson et al., U.S. 2005/0287371A1 to Chaudhari et al., U.S. 2006/0129227A1 to Hengelmolen, U.S. 2006/0180505A1 to Alderson et al., U.S. 2006/0202492A1 to Barvosa-Carter et al., U.S. 2007/0031667A1 to Hook et al. EP1,165,865B1 to Alderson, WO91/01210 to Evans et al., WO91/01186 to Ernest et al., WO99/22838 to Alderson et al., WO99/25530 to Lakes et al., WO00/53830 to Alderson et al., WO2004/012785A1 to Hengelmolen, WO2004/088015A1 to Hook et al., WO2005/065929A1 to Anderson et al., WO2005/072649A1 to Hengelmolen, WO2006/021763A1 to Hook, WO2006/099975A1 to Wittner, and in M.A. Nkansah et al, Modelling the Effects of Negative Poisson's Ratios in Continuous-Fibre Composites, JOURNAL OF MATERIALS SCIENCE, Vol. 28, 1998, pages 2687-2692, A.P. Pickles et al., The Effects of Powder Morphology on the Processing of Auxetic Polypropylene (PP of Negative Poisson's Ratio), POLYMER ENGINEERING AND SCIENCE, Mid-March 1996, Vo. 36, No. 5, pages 636-642. Although a variety of auxetic articles have been described in the art, the literature has not described the production of molded auxetic meshes.

WO 2007/135447 A1 discloses a partly auxetic mesh that has a multitude of spaces defined by first and second linear sides.

US Patent Application No. 2005/142331 discloses a sheet material, and method for producing nonwoven webs, for example for forming a tissue web in which layers of fibrous materials are bonded together with a bonding material. The pattern by which the bonding material is applied may reduce the Poisson ratio of the tissue web, to the point that the tissue web may actually have a negative Poisson ratio. The nonwoven web may be a tissue web that is molded into a drying fabric imparting a 3-dimensional topography to the tissue web that contains a pattern as described above.

US Patent Application No. 2008/011021 provides a fabric that includes a knit structure having a geometric shape such as a triangular lattice shape knit structure which imparts an auxetic property to the fabric due to rotation of one or more portions of the knit structure. The fabric can form a portion of a garment such as a moldable part of the garment or form the entire garment.

WO 2004/088015 discloses a composite component having auxetic properties. The composite component including a first component and a second component, the first component and the second component extend longitudinally relative to an axis. The first component is wrapped around the second component in a helical manner. Applications for such composites include situations where the ability to absorb impacts are desirable, including car bumpers, car interior components, and moulded body parts.

### SUMMARY OF THE INVENTION

The present invention provides an article that comprises an auxetic mesh that has a multitude of open spaces defined by a first and a second linear sides and being molded into a three dimensional shape.

The present invention also provides a method of making a molded article, which method comprises: (a) providing an auxetic mesh_comprising a multitude of open spaces defined by a first and a second linear sides; and (b) molding the auxetic mesh into a three dimensional shape.

The inventor discovered that auxetic meshes can be beneficial in that they can be placed into a desired molded shape or configuration with less distortion than non-auxetic meshes. The openings within the mesh, for example, do not vary as much when compared to molded non-auxetic meshes. The different sized openings in conventional molded meshes may be considered unsightly, and portions of the mesh may sometimes overlap and distort during the molding operation. The present invention alleviates such issues and accordingly provides a molded mesh that may be considered to have an improved appearance. There accordingly can be less opportunity for waste when molding an auxetic mesh according to the present invention - as there may be less products that are discarded due to manufacturing defects. Molded auxetic meshes may be suitable for use in filtering face-piece respirators and in a variety of other products where molded meshes are used. Molded auxetic meshes also may find new applications where the auxetic properties play a beneficial role.

### GLOSSARY

The terms set forth below will have the meanings as defined:
"auxetic" means exhibiting a negative Poisson's ratio;
"comprises (or comprising)" means its definition as is standard in patent terminology, being an open-ended term that is generally synonymous with "includes", "having", or "containing". Although "comprises", "includes", "having", and "containing" and variations thereof are commonly-used, open-ended terms, this invention also may be suitably described using narrower terms such as "consists essentially of", which is semi open-ended term in that it excludes only those things or elements that would have a deleterious effect on the performance of the inventive subject matter;
"mesh" means a structure that has a network of open spaces and that is
substantially larger in first and second dimensions than in a third;
"molded" or "molding" means forming into a desired shape using heat and pressure;
"multitude" means 100 or more;
"polymer" means a material that contains repeating chemical units, regularly or irregularly arranged;
"polymeric" and "plastic" each mean a material that mainly includes one or more polymers and that may contain other ingredients as well;
"plurality" means two or more;
"respirator" means an air filtration device that is worn by a person to provide the wearer with clean air to breathe; and
"support structure" means a construction that is designed to have sufficient structural integrity to retain its desired shape and to help retain the intended shape of the filtering structure that is supported by it.

### BRIEF DESCRIPTlON OF THE DRAWINGS

FIG. 1 shows a front perspective view of a filtering face-piece respirator **10** that uses a molded auxetic mesh **20** of the present invention;
FIG. 2 is an enlarged view of the region circled in FIG. 1;
FIG. 3 is a cross-section of the mask body **12** taken along lines 3-3 of FIG. 1;
FIG. 4 is a schematic view of an apparatus **50** for making an auxetic mesh **20;**
FIG. 5 is an enlarged view of the casting of the extruded polymeric material **60** onto a casting roll **58;**
FIG. 6 is a perspective view of the casting roll **58** that may be used to make an auxetic mesh;
FIG. 6a is an enlarged area of the outer surface of the casting roll **58;**
FIG. 7 is a plan view of a mold that may be used in connection with the present invention; and
FIG. 8 is a front view of an auxetic mesh **20** that may be used in making a molded article in connection with the present invention.

### DETAILED DESCRIPTION OF PREFERRED EMBODIMENTS

In practicing the present invention, an auxetic mesh can be molded into a desired three-dimensional configuration. The inventor discovered that the a molded auxetic mesh can be formed into a desired 3-D shape while preserving the size of the various open spaces in the mesh. As the auxetic mesh attains its three-dimensional shape during molding, the mesh deforms in a fractal manner, substantially retaining the initial mesh appearance, unlike the distortions observed after conventional meshes are formed over bi-curved surfaces. Before being molded, the auxetic mesh may be provided in an initial flat two-dimensional form, which is simple to handle and store. Converting the initial flat auxetic mesh into a three-dimensional shape may provide a more efficient manufacturing pathway when compared to batch processes that would normally required to fabricate a similar netting substantially free of defects. That is, if a non-auxetic mesh is used to produce a three-dimensional product, without the distortions mentioned above, a batch-type casting or injection molding process typically would be used for that purpose.

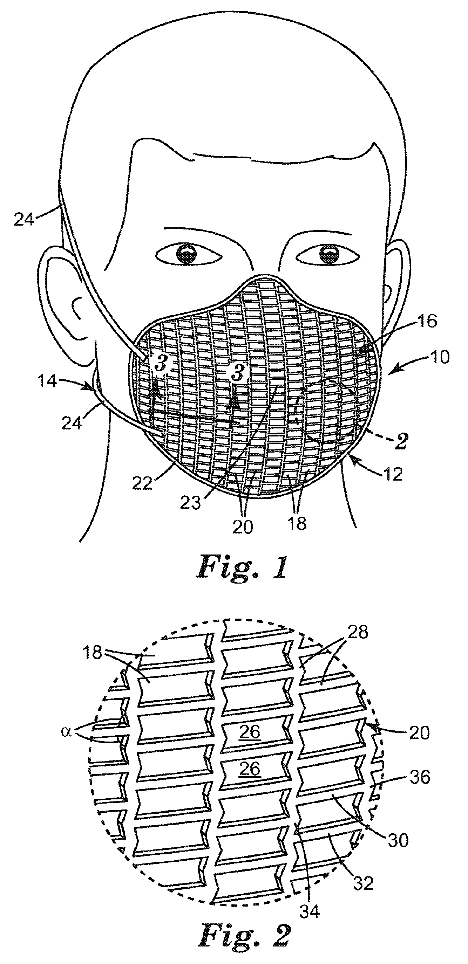

FIG. 1 shows an example of a molded product, a filtering face-piece respirator **10,** that uses a molded auxetic mesh to provide a three-dimensional shape to the product. The filtering face-piece respirator **10** includes a mask body **12** and a harness **14.** The mask body **12** has a support structure **16** that provides structural integrity to the mask body and that provides support for a filtering structure **18** that resides behind the support structure **16.** The filtering structure **18** removes contaminants from the ambient air when a wearer of the respirator **10** inhales. The support structure **16** includes an auxetic mesh **20** that is molded into a three-dimensional configuration, which defines the shape of the mask body **12.** The molded auxetic mesh **20** can provide the structural integrity sufficient for the mask body **12** to retain its intended configuration. The filtering structure **18** may be secured to the support structure **16** at the mask body perimeter **22.** The filtering structure **18** also may be secured to the support structure **16** at the apex **23** of the mask body when an exhalation valve (not shown) is secured thereto. The harness **14** may include one or more straps **24** that enable the mask body **12** to be supported over the nose and mouth of a person. Adjustable buckles may be provided on the harness to allow the straps **24** to be adjusted in length. Fastening or clasping mechanisms also may be attached to the straps to allow the harness **14** to be disassembled when removing the respirator **10** from a person's face and reassembled when donning the respirator **10** from a person's face. Further, description of the filter face-piece respirator may be found in U.S. Patent Application 61/291,052 entitled *Filtering Face-Piece Respirator Having An Auxetic Mesh In The Mask Body.*

FIG. 2 shows an enlarged view of the open-work auxetic mesh **20,** which may be used in connection with the present invention. As illustrated, the molded auxetic mesh **20** includes a multitude of open spaces **26** that may be defined by polymeric strands **28.** The strands **28** that define each open space **26** may include first and second sides **30** and **32** and third and fourth sides **34** and **36.** The first and second sides **30** and **32** may be linear, whereas the third and fourth sides **34** and **36** may be non-linear and include segments that are offset non-perpendicularly to the first and second sides **30** and **32.** The offset segments do not form right angles to the first and second sides **30** and **32.** Rather, they form a chevron end that has angles α that may be about 20 to 80 degrees, more typically about 40 to 70 degrees. Each opening typically has a size of about 5 to 50 square millimeters (mm²), more typically about 10 to 35 mm². Other auxetic mesh geometries (now known or later developed) also may be suitably used in connection with the present invention. The Poisson ratio of the mesh typically is less than -0.2, more typically less than -0.4, and still more typically less than -0.7, but usually is not further less than -2.2. Examples of meshes that exhibit negative Poisson ratios and that may be suitable for use in connection with the present invention are described in U.S. Patent Application Publication 2006/0129227A2 to Hengelmolen and 2006/0180505A1 to Alderson et al. At the upper end, the Poisson ratio is not greater than zero. The multitude of openings in the mesh, after being molded, tend to maintain similar sizes. When tested according to the Cell Size Determination method described below, the standard deviation of cell sizes is less than 0.04, 0.03, and even less than 0.025.

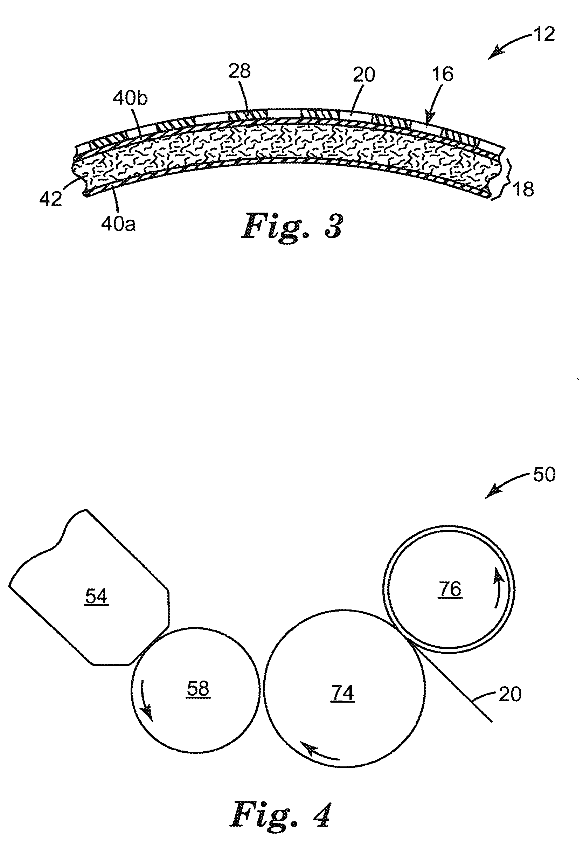

FIG. 3 shows a cross-section of the mask body **12,** which includes the support structure **16** and the filtering structure **18.** The support structure **16** typically has a thickness of about 0.60 to 0.85 millimeters (mm), and each strand **28** typically has an average cross-sectional area of about 0.1 to 3.5 mm², more typically of about 1.5 to 2.6 mm². The auxetic mesh **20** may be made from a variety of polymeric materials. Polymers suitable for auxetic mesh formation are generally either a thermoplastic or a thermoset material. Thermoplastic materials are materials which melt and/or flow upon the application of heat, resolidify upon cooling and again melt and/or flow upon the application of heat. The thermoplastic material undergoes only a physical change upon heating and cooling, no appreciable chemical change occurs. Thermoset materials, however, are curable materials that irreversibly cure, such as becoming crosslinked, when heated or cured. Once cured, the thermoset material will not appreciably melt or flow upon application of heat.

Examples of thermoplastic polymers that can be used to form auxetic meshes include: polyolefins, such as polyethylenes, polypropylenes, polybutylenes, blends of two or more of such polyolefins, and copolymers of ethylene and/or propylene with one another and/or with small amounts of copolymerizable, higher, alpha olefins, such as pentene, methylpentene, hexene, or octene; halogenated polyolefins, such as chlorinated polyethylene, poly(vinylidene fluoride), poly(vinylidene chloride), and plasticized poly(vinyl chloride); copolyester-ether elastomers of cyclohexane dimethanol, tetramethylene glycol, and terephthalic acid; copolyester elastomers such as block copolymers of polybutylene terephthalate and long chain polyester glycols; polyethers, such as polyphenyleneoxide; polyamides, such as poly(hexamethylene adipamide), e.g., nylon 6 and nylon 6,6; nylon elastomers; such as nylon 11, nylon 12, nylon 6,10 and polyether block polyamides; polyurethanes; copolymers of ethylene, or ethylene and propylene, with (meth)acrylic acid or with esters of lower alkanols and ethylenically-unsaturated carboxylic acids, such as copolymers of ethylene with (meth)acrylic acid, vinyl acetate, methyl acrylate, or ethyl acrylate; ionomers, such as ethylene-methacrylic acid copolymer stabilized with zinc, lithium, or sodium counterions; acrylonitrile polymers, such as acrylonitrile- butadiene-styrene copolymers; acrylic copolymers; chemically-modified polyolefins, such as maleic anhydride- or acrylic acid- grafted homo- or co-polymers of olefins and blends of two or more of such polymers, such as blends of polyethylene and poly(methyl acrylate), blends of ethylene-vinyl acetate copolymer and ethylene-methyl acrylate; blends of polyethylene and/or polypropylene with poly(vinyl acetate); and thermoplastic elastomer block copolymers of styrene of the A-B or A-B-A type, where A represents a thermoplastic polystyrene block and B represents a rubbery block of polyisoprene, polybutadiene, or poly(ethylene/butylene), examples include linear, radial, star and tapered styrene-isoprene block copolymers, linear styrene-(ethylenebutylene) block copolymers, and linear, radial, and star styrene-butadiene block copolymers. The foregoing polymers are normally solid, generally high molecular weight, and melt-extrudable such that they can be heated to form molten viscous liquids which can be pumped as streams to the extrusion die assembly and readily extruded therefrom under pressure.

Examples of suitable commercially-available polymers include: those sold as "ELVAX" ethylene-vinyl acetate copolymers, such as ELVAX 40W, 4320, 250, and 350; those sold as "EMAC" ethylene-methyl acrylate copolymers, such as EMAC DS-1274, DS-1176, DS-1278-70, SP 2220 and SP-2260; those sold as "VISTA FLEX" thermoplastic elastomers, such as VISTA FLEX 641 and 671; those sold as "PRIMACOR" ethylene-acrylic acid copolymers, such as PRIMACOR 3330, 3440, 3460, and 5980; those sold as "FUSABOND" maleic anhydride-polyolefin copolymers, such as FUSABOND MB-110D and MZ-203D; those sold as "HIMONT" ethylene-propylene copolymers, such as HIMONT KS-057, KS-075, and KS-051P; those sold as "FINA" polypropylenes, such as FINA 3860X; those sold as "ESCORENE" polypropylenes, such as ESCORENE 3445; the polymer sold as "VESTOPLAST 750" ethylene-propylene-butene copolymer; those sold as "SURLYN" ionomers, such as SURLYN 9970 and 1702; those sold as "ULTRAMID" polyamides, such as ULTRAMID B3 nylon 6 and ULTRAMID A3 nylon 6,6; those sold as "ZYTEL" polyamides, such as ZYTEL FE3677 nylon 6,6; those sold as "RILSAN" polyamide elastomers, such as BMNO P40, BESNO P40 and BESNO P20 nylon 11; those sold as "PEBAX" polyether block polyamide elastomers, such as PEBAX 2533,3533,4033,5562 and 7033; those sold as "HYTREL" polyester elastomers, such as HYTREL 3078,4056 and 5526; those sold as "KRATON" and "EUROPRENE SOL TE" styrene block copolymers, such as KRATON D1107P, G1657, G1750X, and D1118X and EUROPRENE SOL TE 9110,and 6205.

As mentioned above, blends of two or more materials also may be used in the manufacture of auxetic meshes. Examples of such blends include: a blend of 85 to 15 wt % poly(ethylene-vinyl acetate), such as "ELVAX" copolymer, with 15 to 85 wt % poly(ethylene-acrylic acid), such as "PRIMACOR" polymer, the poly(ethylene-vinyl acetate) component of the blend generally will have a weight average molecular weight, M_{w}, of 50,000 to 220,000 and will have 5 to 45 mol% of its interpolymerized units derived from the vinyl acetate comonomer and the balance of units from ethylene, the poly(ethylene-acrylic acid) component of the blend generally will have a M_{w} of 50,000 to 400,000 and have 1 to 10 mol% of its interpolymerized units derived from acrylic acid and the balance from ethylene; a blend of 20 to 70 wt % poly(ethylene-propylene-butene) terpolymer having M_{w} of 40,000 to 150,000 and derived from equally large amounts of butene and propylene and a small amount of ethylene, such as "VESTOPLAST 750" polymer, with 80 to 30 wt % isotactic polypropylene; a blend that contains from 15 to 85 wt % poly(ethylene-vinyl acetate) and 85 to 15 wt % poly(ethylene-methyl acrylate), such as "EMAC" polymer, the poly(ethylene-vinyl acetate) component of this blend can have a molecular weight and composition like that described above, the poly(methyl acrylate) component can have a M_{w} of 50,000 to 200,000 and 4 to 40 mole % of its interpolymerized units derived from the methyl acrylate comonomer.

Polypropylene may be preferred for use in a molded auxetic mesh that is used on a respirator to enable proper welding of the support structure to the filtering structure (filtering layers often comprise polypropylene as well). The polymeric materials used to make an auxetic mesh typically have a Young's modulus of about 0.3 to 1900 Mega Pascals (MPa), more typically 2 to 250 MPa. As shown in FIG. 3, the filtering structure **18** may include one or more cover webs **40a** and **40b** and a filtration layer **42.** The cover webs **40a** and **40b** may be located on opposing sides of the filtration layer **42** to capture any fibers that could come loose therefrom. Typically, the cover webs **40a** and **40b** are made from a selection of fibers that provide a comfortable feel, particularly on the side of the filtering structure **18** that makes contact with the wearer's face. The cover webs too often comprise polypropylene.

When molding an auxetic mesh in accordance with the present invention, the auxetic mesh may be molded by itself or it may be molded in conjunction with other layers. For example, when making a filtering face-piece respirator, the auxetic mesh may be first molded, and the other layers, such as the filtering structure, may be subsequently joined to the molded mesh. Alternatively, the various layers may be stacked together and molded into the desired configuration. Further, the auxetic mesh may be cold-molded or hot-molded. When the auxetic mesh is cold-molded, the mesh is first heated before being placed between unheated molding members (see, for example, U.S. Patent 7,131,422B1 to Kronzer et al.). The unheated molding members then conform the heated auxetic mesh to its desired configuration. Alternatively, the molding members may be heated, and that heat may be transferred to the auxetic mesh during the molding operation. Thus, in a cold-molding operation, the heat and pressure are not necessarily applied to the auxetic mesh contemporaneously, whereas in a hot-molding operation the heat and pressure tend to be applied at the same time. In hot molding, the various layers may become bonded to each other at one or more desired locations when the heat and pressure is applied. Alternatively, the various layers may be joined together at one or more desired locations through other operations such as welding (for example, ultrasonic welding) or adhesive bonding. The additional layers may be on one or both sides of the auxetic mesh. When making a filtering face-piece respirator, the mask body may be molded into a variety of different shapes and configurations. Many of these various shapes and configurations are described in the patent literature and accordingly will not be discussed further here.

### EXAMPLES

### Cell Size Determination

Auxetic mesh cell size was determined using defined diameter rods that were mounted in a fixture to facilitate measurement of the open spaces or cells. The probe rods ranged in diameter from 0.0254 cm (centimeter) to 0.5334 cm, in 0.0254 cm increments. The cell size was measured by selecting the maximum size probe that fit into the cell without causing distortion of the cell shape prior to placement of the probe. This size was recorded, and the next cell size was measured and recorded until all cells contained within the molded mesh were measured and the cells tallied at each probe size.

### Auxetic Mesh Formation Apparatus and Process

An auxetic web was produced using a system **50** that resembles the apparatus shown in FIG. 4. A 40 mm diameter twin-screw extruder was fitted with a gear pump and was used to deliver a molten polymer blend at melt temperature of approximately 246 °C to a slot die **54,** at an extrusion rate of 1.43 kg/hr/cm (kilogram per hour per length of die in centimeters). The polymer blend contained a three-part polymer composition that included pigment and anti-block agents. The polymer blend formulation is given below in Table 1. At the end of the slot die **54,** the polymer blend is transferred to a casting roll **58** where the auxetic mesh is formed. The resulting mesh **20** is removed from the casting roll **58** where it is transferred to take-off roll **74.** A back-up roll **76** contacts the take-off roll **74** to keep the auxetic mesh on the take-off role until the point of departure from the roll.

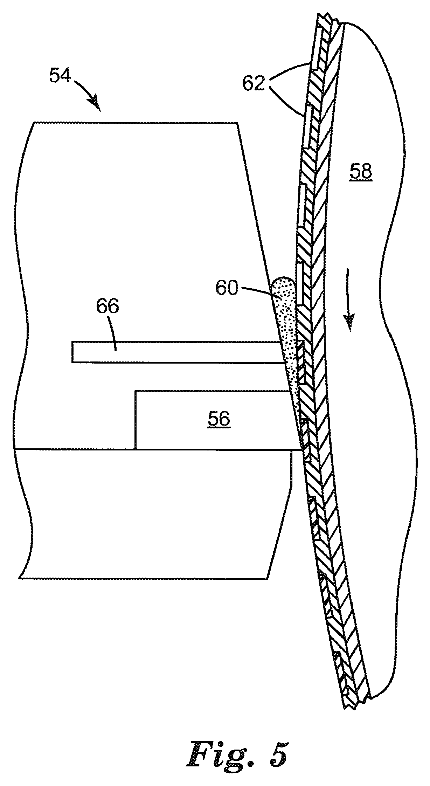

FIG. 5 shows the orientation of the slot die **54,** doctor blade **56,** and casting roll 58 in greater detail. The slot die **54** was maintained at a temperature of about 246 °C and was positioned relative to the casting roll **58** such that a bank **60** of molten polymer was formed along a horizontal plane. The molten polymer **60** was forced into the casting roll cavity **62** by rotating the casting roll **58** against the doctor blade **56.** The doctor blade **56** both forced molten polymer **60** into the casting roll cavity **62** and wiped the outer surface **64** of the casting roll **58** so that the molten polymer **60** was left in the cavity alone. Polymer that was removed from the polymer bank **60** via the casting roll **58** was replenished through the resin channel **66** of the slot die **54.** By this process, the auxetic mesh was continually casted.

**Table 1- Polymer Blend Composition**

| **Weight Percent** | **Material Type** | **Trade Name** | **Supplier** | **Supplier location** |
|---|---|---|---|---|
| 41% | Olefin Elastomer | Engage 8490 | DuPont Dow Elastomers LLC. | Wilmington, Delaware |
| 41% | LLDPE | Hypel™ LLDPE 52 | Entec Polymers, LLC | Houston, Texas |
| 15% | SEBS | Kraton G1657 | Kraton Polymers LLC | Houston, Texas |
| 3% | LDPE | Yellow Pigment compounded with Atmer 1753 Erucamide (Loading indicated an next line) | Clariant Masterbatches | Chicago, Ill |
| 0.12% | Erucamide | Atmer 1753 | Unichema North America | Minneapolis, MN |

During processing, the doctor blade **56** was forced against the rotating casting roll **58** at a pressure of 0.656 kN/cm (kilo-Newtons per lineal cm) -- a pressure that forced molten polymer **60** to fill the channels or cavities **62** of the casting roll **58.** The doctor blade **56** was maintained at a temperature of 246 °C. The polymer bank **60** assured that sufficient polymer was present across the transverse length of the casting roll **58** to fill the channels **62** of the casting roll.

As shown in FIG. 4, the apparatus **50** used a two-roll transfer system, which was composed of a chrome take-off roll **74** and a rubber-surfaced backup role **76,** to extract the cast auxetic mesh **20** from the casting roll **58** and convey it to a collection apparatus. The takeoff role **74** contacted the casting roll **58** at a point 225° degrees counter clockwise (the direction of rotation) from the point of contact between the slot die **54** and casting roll **58.** The backup roll **76** contacted the take-off roll **74** it a point 135° degrees clockwise (direction of rotation) from the point of contact between the casting roll **58** and take-off roll **74.** Both rolls were maintained at a temperature of approximately 4.4 °C and had surface speeds of 5.0 m/min (meters per minute). The nip pressure between the casting roll **58** and take-off roll **74** was maintained at 4.37 N/cm; the nip pressure between the take-off roll **74** and the backup role **76** was 4.37 N/cm. After leaving the casting roll, the auxetic mesh **20** was transferred to the take-off roll **74** and was further cooled and conveyed through web handling rolls to a windup roll (not shown). The resulting mesh had a thickness of about 1.63 mm and a basis weight of 47 g/cm² (grams per square centimeter). The final wound roll of auxetic mesh contained an intermittent thin film of polymeric material between each of the auxetic pattern elements. All residual inter-element film was removed by hand using a tweezers. Other methods of residual film removal could include burning, heating, brushing, punching, etc.

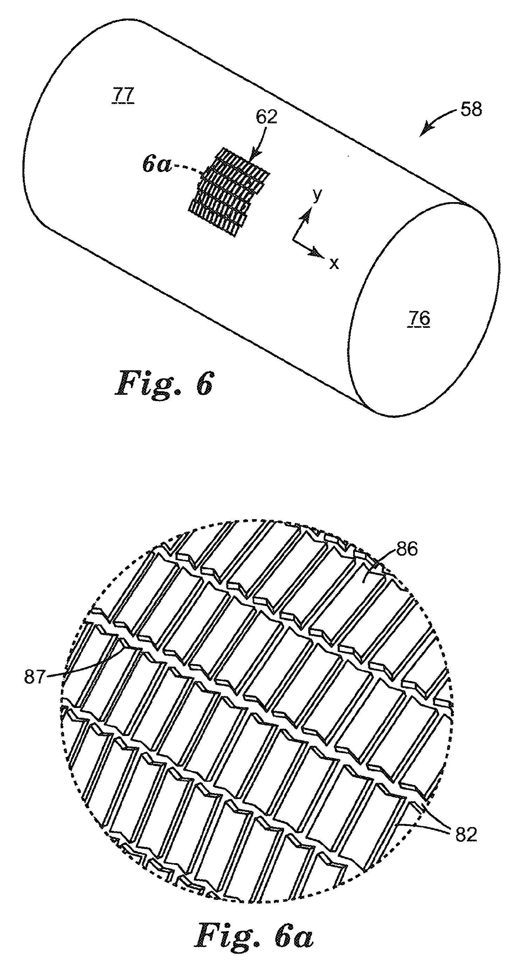

As shown in FIGs. 6 and 6a, the casting roll **58** had an auxetic-shaped cavity pattern **62** machined into its face. The cavity pattern **62** was cut into the face **77** of a 23.5 cm diameter, chrome-surfaced, steel roll **58.** The auxetic-shaped pattern **62** of interconnecting channels **82** was machined into the face **77** of the casting roll **58** using a Harvey Tool #11815-30 Carbide Miniature Tapered End Mill, Harvey Tool Company LLC, Rowley, MA having a 6° included angle. The channels **82** of the auxetic pattern **62** were machined to a depth of 1.143 mm, with the rectangular channel formed by 3° tapered edge. The channels **82** are defined by uncut "island" areas **86** in the roll face **77,** whereby the machined area constituted the channels **82.** The unmachined islands 86 on the roll face **84,** onto which the doctor blade **56** rides during mesh formation, were the shape of elongated hexagons that had isosceles concave 'chevron' ends **87.**

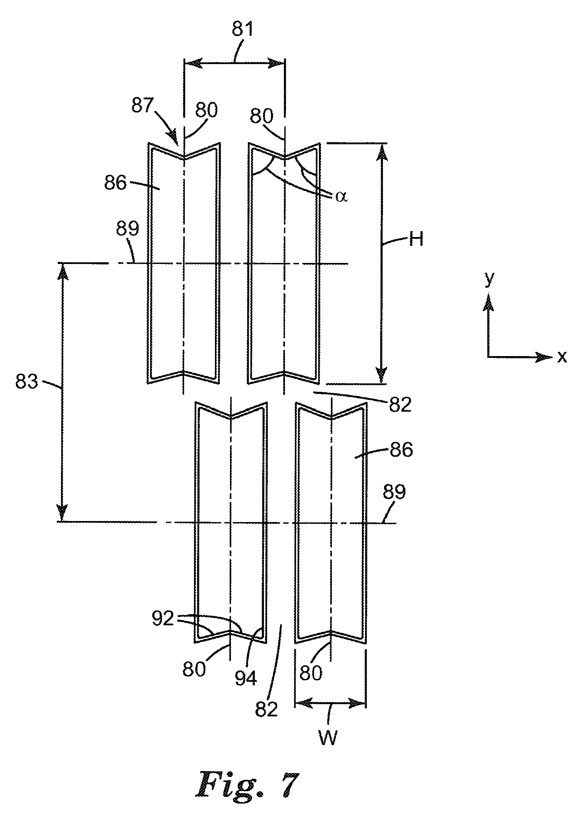

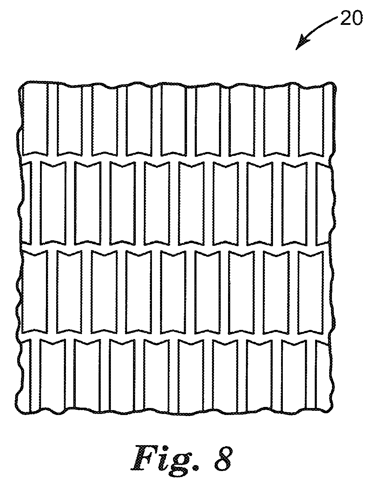

As shown in FIG. 7, islands **86** were oriented on the roll **76** such that their long axis **80** aligned with the circumstantial line of the roll **76.** The islands **86** had an overall height **H** and width **W** of 11.1 mm and 3.1 mm, respectively. Two equally length lines, **92** extending 1.67 mm from the ends of each major side **94** of the hexagon, and meeting at its long axis centerline **80,** formed the end chevron **87** of an island **86.** Islands were spaced apart, relative to their centerlines, either along their long axis **80** or narrow (short) axis **89.** The long axes of all islands were parallel to the circumstantial line of the casting roll **76.** The narrow axes **89,** of the islands were oriented along the axis of the casting roll **58.** Alternating transverse rows of islands were offset from the row above or below by one half the width of each island. Transverse spacing of the islands **81** was 4.27 mm from long axis **80** to an adjacent long axis **80.** Circumstantial spacing **83** of the islands was 11.88 mm from short axis **89** to short axis **89.** Angle **α** was 69 degrees. With the islands 86 formed in this manner, a network of channels 82 was created; these channels 82 were filled with polymer during the casting process and acted as molds for the auxetic mesh 20. FIG. 8 shows an image of the molded auxetic mesh 20 produced as described above.

### Auxetic Mesh Characterization Test Method

Auxetic mesh produced as described in the Auxetic Mesh Formation Apparatus and Process were evaluated for their auxetic properties through a tensile testing procedure. In this procedure, a 10.2 cm by 1.0 cm section of mesh was cut such that the long axes of the mesh cells were oriented in line with the transverse axis of the tensile testing apparatus. The crosshead speed of the tensile testing apparatus was maintained at 50.8 centimeters per minute until the sample was elongated to 50 and 100 percent of its original length. As is indicative of an auxetic structure, when placed under tension, the sample section increased in width in response to axial loading. The sample increased to a width of 105 percent of its original width at both elongations.

### Three-Dimensional Molding of an Auxetic Mesh

Auxetic mesh produced as described in the Auxetic Mesh Formation Apparatus and Process section was molded into a three-dimensional cup shape. The auxetic mesh was molded into the cup shape of a respirator by draping a 21.5 cm by 25.5 cm section of mesh over an aluminum male mold. The mold had a generally hemispherical shape with an elliptical base with a major axis of 13.3 cm, and a minor axis of 10.5 cm, and a dome height of 4.4 cm. The hemispherical-shape mold was fixed to a rectangular aluminum plate that extended approximately 3.4 cm beyond the base of the mold. The section of auxetic mesh was draped over the mold so that it's edges extended beyond the outer perimeter of the base plate. A perimeter aluminum frame, with an interior cutout that mirrored the perimeter of the mold, was placed over the auxetic mesh and mold so that the mesh could be drawn over the mold without significant mesh distortion. The perimeter frame was then fixed to the base plate to hold the mesh in position against the mold. The mold, mesh, and securing plate assembly was placed in a preheated, air circulating oven for 20 minutes at a temperature of 105 C. After heating in the oven for the specified duration, the assembly was removed from the oven and was allowed to cool to room temperature. When the assembly reached room temperature, the perimeter frame was uncoupled from the base plate, and the resultant molded auxetic mesh removed from the mold. It was observed that the molded auxetic mesh retained its general auxetic structure, and it was shape-retaining even after compression in the mold. It was also noted that the auxetic mesh was able to easily adapt to the male mold shape without significant distortions to the mesh, such as folds or creases.

### Respirator Cell Size Comparison

A respirator shell mesh was produced as described above in the Three-Dimensional Molding of Auxetic Mesh section was evaluated for cell size uniformity by surveying the size of the cells over the entirety of the mold structure. The cell size uniformity of the auxetic mesh was compared to the uniformity of shell meshes that were removed from commercially available filtering face-piece respiratory masks. Detailed measurements of the cell opening size and size distribution for each of several shell meshes were determined. Respirator shell mesh was evaluated from a JSP 822 mask, manufactured by JSP Ltd, Oxfordshire, UK; a Venus 190 mask, produced by Nani Mumbai-MN, India; a 2200 mask inner shell, a 2200 mask outer shell, and a 2600 outer shell, all manufactured by Moldex-Metric, Culver City, California. The meshes were removed from the filter media to enable cell size measurement, the exception being the 3M auxetic mesh which was free standing. Each cell opening size was measured and recorded for the entire mesh using gauging probes as described above in Cell Size Determination.

The resulting measurements were compiled to provide the number of cells contained within the mesh of a given size, see Table 2. From this data the cell size distribution and standard deviation determined were determined and are given in Table 2.

**Table 2 - Cell Size Distribution**

| **Probe Size(cm)** | **JSP 822** | **Venus 190** | **Moldex 2200 Inner Shell** | **Moldex 2600 Outer Shell** | **Moldex 2200 Outer Shell** | **Molded Auxetic Mesh** |
|---|---|---|---|---|---|---|
| 0.0254 | 1 | 1 | 0 | 1 | 2 | 0 |
| 0.0508 | 4 | 0 | 3 | 5 | 3 | 0 |
| 0.0762 | 3 | 0 | 2 | 5 | 5 | 0 |
| 0.1016 | 25 | 2 | 7 | 10 | 8 | 0 |
| 0.127 | 51 | 5 | 6 | 24 | 10 | 0 |
| 0.1524 | 92 | 7 | 14 | 20 | 34 | 0 |
| 0.1778 | 99 | 32 | 22 | 70 | 43 | 2 |
| 0.2032 | 96 | 32 | 22 | 77 | 81 | 11 |
| 0.2286 | 82 | 36 | 50 | 164 | 192 | 54 |
| 0.254 | 68 | 57 | 48 | 194 | 116 | 99 |
| 0.2794 | 66 | 162 | 77 | 286 | 88 | 222 |
| 0.3048 | 45 | 320 | 101 | 243 | 93 | 25 |
| 0.3302 | 49 | 135 | 106 | 27 | 104 | 0 |
| 0.3556 | 15 | 4 | 119 | 0 | 92 | 0 |
| 0.381 | 2 | 0 | 74 | 0 | 34 | 0 |
| 0.4064 | 0 | 0 | 62 | 0 | 32 | 0 |
| 0.4318 | 0 | 0 | 35 | 0 | 2 | 0 |
| 0.4572 | 0 | 0 | 28 | 0 | 1 | 0 |
| 0.4826 | 0 | 0 | 16 | 0 | 0 | 0 |
| 0.508 | 0 | 0 | 5 | 0 | 0 | 0 |
| 0.5334 | 0 | 0 | 0 | 0 | 0 | 0 |
| Standard Deviation | 0.0676 | 0.0444 | 0.0814 | 0.0510 | 0.0708 | 0.0234 |

The data shown in Table 2 reveals that the molded auxetic mesh has the narrowest distribution of cell size compared to known non-auxetic molded meshes. Analysis of the data for standard deviation shows that the inventive auxetic mesh has the smallest standard deviation of all six meshes measured. The reduction of cell size distribution in the auxetic mesh is a result of the deformation characteristics of an auxetic structure, which allows it to more readily conform to highly contoured shapes without gross deformation of the mesh, such as folding or drawing.

## Claims

1. An article that comprises:
an auxetic mesh that has a multitude of open spaces defined by a first and a second linear sides and being molded into a three-dimensional shape.

2. The article of claim 1, wherein the molded auxetic mesh has mesh openings have a size that varies by a standard deviation of less than 0.04.

3. The article of claim 1, wherein the molded three-dimensional shape has mesh openings that vary in size by a standard deviation of less than 0.03.

4. The article of claim 1, wherein the molded three-dimensional shape has mesh openings that vary in size by a standard deviation of less than 0.025.

5. The article of claim 1, wherein the molded three-dimensional shape comprises a multitude of openings that have a generally uniform size.

6. The article of claim 1, wherein the auxetic mesh includes a third and a fourth sides that are nonlinear and include segments that are offset nonperpendicularly to the first and second linear sides.

7. The article of claim 6, wherein the offset segments form an angle α to the first and second sides, that is 20 to 80°.

8. The article of claim 1, wherein the auxetic mesh exhibits a Poisson ratio of less than -0.2.

9. The article of claim 1, wherein the auxetic mesh exhibits a Poisson ratio of less than -0.4.

10. The article of claim 1, wherein the auxetic mesh exhibits a Poisson ratio of less than -0.7.

11. The article of claim 8, wherein the Poisson ratio is not further less than -2.2.

12. A method of making a molded article, the method comprises:
(a) providing an auxetic mesh comprising a multitude of open spaces defined by a first and a second linear sides;
(b) molding the auxetic mesh into a three-dimensional shape.

13. The method of claim 12, wherein the auxetic mesh is molded by a contemporaneous application of heat and pressure.

14. The method of claim 12, wherein the auxetic mesh is first heated and then is formed into the three-dimensional shape through application of a force from a solid body.

## Patentansprüche

1. Gegenstand, umfassend:
ein auxetisches Gitter, das eine Vielzahl von Zwischenräumen aufweist, die von einer ersten und einer zweiten linearen Seite definiert werden, und das zu einer dreidimensionalen Gestalt geformt ist.

2. Gegenstand nach Anspruch 1, wobei das geformte auxetische Gitter Gitteröffnungen mit einer Größe aufweist, die gemäß einer Standardabweichung von weniger als 0,04 variieren.

3. Gegenstand nach Anspruch 1, wobei die geformte dreidimensionale Gestalt Gitteröffnungen mit einer Größe aufweist, die gemäß einer Standardabweichung von weniger als 0,03 variieren.

4. Gegenstand nach Anspruch 1, wobei die geformte dreidimensionale Gestalt Gitteröffnungen mit einer Größe aufweist, die gemäß einer Standardabweichung von weniger als 0,025 variieren.

5. Gegenstand nach Anspruch 1, wobei die geformte dreidimensionale Gestalt eine Vielzahl von Öffnungen umfasst, die eine allgemein einheitliche Größe aufweisen.

6. Gegenstand nach Anspruch 1, wobei das auxetische Gitter eine dritte und eine vierte Seite aufweist, die nicht-linear sind und die Segmente aufweisen, die nicht-senkrecht zur ersten und zur zweiten linearen Seite versetzt sind.

7. Gegenstand nach Anspruch 6, wobei die versetzten Segmente einen Winkel α, der 20 bis 80° beträgt, mit der ersten und der zweiten Seite bilden.

8. Gegenstand nach Anspruch 1, wobei das auxetische Gitter eine Poisson-Zahl von weniger als -0,2 aufweist.

9. Gegenstand nach Anspruch 1, wobei das auxetische Gitter eine Poisson-Zahl von weniger als -0,4 aufweist.

10. Gegenstand nach Anspruch 1, wobei das auxetische Gitter eine Poisson-Zahl von weniger als -0,7 aufweist.

11. Gegenstand nach Anspruch 8, wobei die Poisson-Zahl nicht noch weniger als -2,2 beträgt.

12. Verfahren zur Herstellung eines Formteils, wobei das Verfahren umfasst:
(a) Bereitstellen eines auxetischen Gitters, das eine Vielzahl von Zwischenräumen umfasst, die durch eine erste und eine zweite lineare Seite definiert werden;
(b) Formen des auxetischen Gitters zu einer dreidimensionalen Gestalt.

13. Verfahren nach Anspruch 12, wobei das auxetische Gitter durch gleichzeitiges Aufbringen von Wärme und Druck geformt wird.

14. Verfahren nach Anspruch 12, wobei das auxetische Gitter zuerst erwärmt und dann durch die Aufbringung einer Kraft von einem massiven Körper in die dreidimensionale Gestalt geformt wird.

## Revendications

1. Article comprenant :
un maillage auxétique présentant une multitude d'espaces ouverts définis par un premier et un deuxième côté linéaires, et étant moulé en une forme en trois dimensions.

2. Article selon la revendication 1, dans lequel le maillage auxétique moulé présente des ouvertures de maille ayant une taille qui varie selon un écart type inférieur à 0,04.

3. Article selon la revendication 1, dans lequel la forme tridimensionnelle moulée présente des ouvertures de maille dont la taille varie selon écart type inférieur à 0,03.

4. Article selon la revendication 1, dans lequel la forme tridimensionnelle moulée présente des ouvertures de maille dont la taille varie selon écart type inférieur à 0,025.

5. Article selon la revendication 1, dans lequel la forme tridimensionnelle moulée comprend une multitude d'ouvertures qui ont une taille généralement uniforme.

6. Article selon la revendication 1, dans lequel le maillage auxétique comprend un troisième côté et un quatrième côté qui ne sont pas linéaires et comprend des segments qui sont décalés de façon non perpendiculaire des premier et deuxième côtés linéaires.

7. Article selon la revendication 6, dans lequel les segments décalés forment un angle α avec les premier et deuxième côtés, qui va de 20 à 80°.

8. Article selon la revendication 1, dans lequel le maillage auxétique présente un rapport de Poisson inférieur à -0,2.

9. Article selon la revendication 1, dans lequel le maillage auxétique présente un rapport de Poisson inférieur à -0,4.

10. Article selon la revendication 1, dans lequel le maillage auxétique présente un rapport de Poisson inférieur à -0,7.

11. Article selon la revendication 8, dans lequel le rapport de Poisson n'est pas en outre inférieur à -2,2.

12. Procédé de fabrication d'un article moulé, le procédé comprenant :
(a) la fourniture d'un maillage auxétique comprenant une multitude d'espaces ouverts définis par des premier et deuxième côtés linéaires ;
(b) le moulage du maillage maille auxétique en une forme tridimensionnelle.

13. Procédé selon la revendication 12, dans lequel le maillage auxétique est moulé par une application simultanée de chaleur et de pression.

14. Procédé selon la revendication 12, dans lequel le maillage auxétique est d'abord chauffé, puis est formé en la forme tridimensionnelle par application d'une force provenant d'un corps solide.
